# EUROPÄISCHE PATENTSCHRIFT

(11) **EP 0 851 168 B1**
(45) Veröffentlichungstag und Bekanntmachung des Hinweises auf die Patenterteilung: **29.05.2002**
(21) Anmeldenummer: 97890224.5
(22) Anmeldetag: 12.11.1997
(51) Int. Cl.: F21V 5/02, B60Q 1/06, F21V 14/06

(54) **Fahrzeugleuchte**
Vehicle headlamp
Projecteur de véhicule

(30) Priorität: 23.12.1996 AT 75296 U
(43) Veröffentlichungstag der Anmeldung: 01.07.1998
(73) Patentinhaber: Zizala Lichtsysteme GmbH, A-3250 Wieselburg (AT)
(72) Erfinder: Kanzler, Josef, 3644 Emmersdorf (AT)
(74) Vertreter: Matschnig, Franz, Dipl.-Ing.

(56) Entgegenhaltungen:
- FR-A- 606 316
- US-A- 2 576 875
- PATENT ABSTRACTS OF JAPAN vol. 016, no. 438 (M-1309), 11. September 1992 & JP 04 149902 A (JAPAN ELECTRON CONTROL SYST CO LTD), 22. Mai 1992

## Beschreibung

Die Erfindung betrifft ein Fahrzeugscheinwerfer, mit Lichtabgabeverstellmöglichkeit relativ zum Fahrzeug, gemäß dem Oberbegriff des Anspruchs 1 (siehe Dokument FR-A- 606 316).

Derartige Lichtabgabeverstellmöglichkeiten relativ zum Fahrzeug sind vielfältig entwickelt worden und meist eine Dreipunktaufhängung der gesamten Leuchte mit Verstellbarkeit von zwei Aufhängepunkten, oder aber auch z.B. eine entsprechende Dreipunktaufhängung einer Reflektoreinheit innerhalb eines Leuchtengehäuses. Die meisten dieser justiermöglichkeiten müssen von innerhalb der Karosserie her wahrgenommen werden und erst in letzter Zeit sind Vorschläge gemacht worden, gemäß denen an den von außen zugänglichen Leuchtenrahmen Bedienungsöffnungen zum Einfügen eines Schraubendrehers vorgesehen sind.

Im Gegensatz dazu wird erfindungsgemäß und wie im Anspruch 1 angegeben, eine optische Verstellmöglichkeit im Strahlengang innerhalb der Leuchte vorgesehen. Demgemäß ist zur Lichtabgabeverstellung in der Leuchte ein im Lichtweg verschiebbarer, insbesondere verdrehbarer, Durchstrahlkörper mit über den Lichtabgabequerschnitt der Leuchte variierender Dicke vorgesehen ist.

Mit anderen Worten ist der Durchstrahlkörper ein Prisma.

Besonders vorteilhaft ist dabei eine Ausführungsform, bei der der Durchstrahlkörper die oder ein Teil der Leuchten Frontscheibe ist, sodaß diese Verstellmöglichkeit von außerhalb der Karosserie her gegeben ist, wobei bevorzugt die Leuchtenfrontscheibe verdrehbar ist. Fahrzeugleuchten mit kreisrunder Lichtaustrittsfläche werden in letzter Zeit häufiger konstruiert, hauptsächlich als sogenannte Linsenscheinwerfer.

Zur Verschiebung des Durchstrahlkörpers ist vorzugsweise eine Verzahnung vorgesehen, da Verzahnungen mit hoher Genauigkeit betätigbar sind.

Insbesondere lassen sich Zahnprofile gegenüber einem festen Gegenhalt über einen Schraubendreher betätigen, deswegen ist die bevorzugteste Ausführungsform eine Fahrzeugleuchte mit kreisförmiger Frontscheibe mit Randverzahnung.

Nachdem die Lichtabgabeverstellmöglichkeit im Strahlengang der Leuchte erfolgt, kann die Leuchte als solche starr und unverstellbar mit der Karosserie verbunden werden, im günstigsten Fall der Reflektor der Leuchte. Besonders bevorzugt ist die einschalige Ausbildung der Leuchte zur Erzielung einer hohen Wärmeableitung, die dadurch optimiert werden kann, daß als Schalenmaterial, insbesondere als Material für den Reflektor, infrarotstrahlendurchlässiges Material eingesetzt wird.

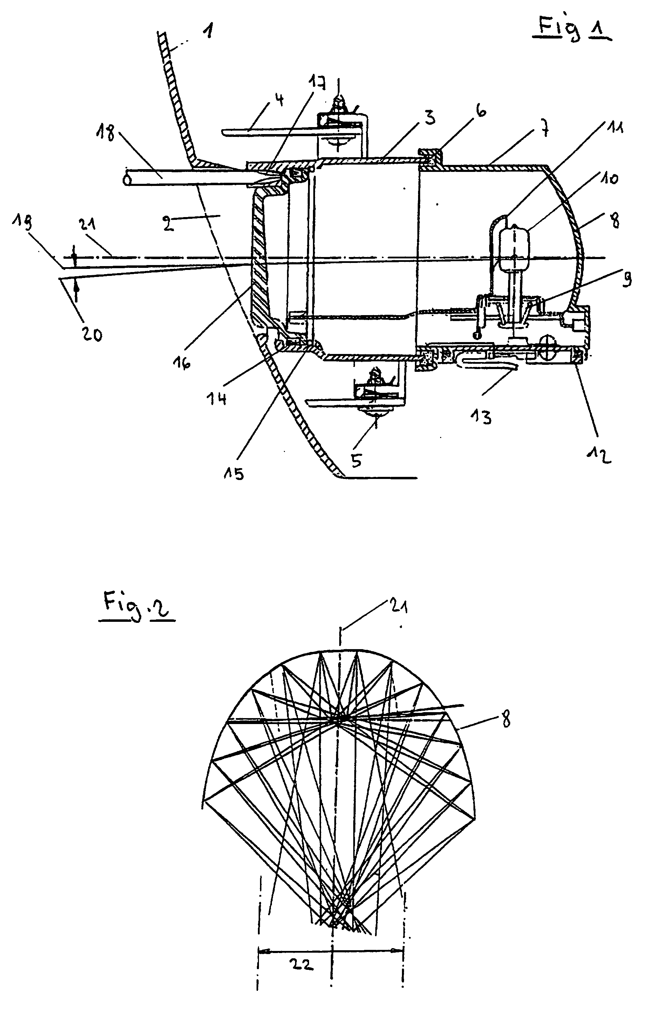

Die Erfindung wird im folgenden anhand eines Ausführungsbeispiels unter Bezugnahme auf die Zeichnung näher beschrieben, in der Fig. 1 ein zentraler Vertikalschnitt durch einen Fahrzeugscheinwerfer und Fig. 2 ein Horizontalschnitt durch dessen Reflektor mit Strahlengängen ist.

An einem Karosserieteil 1 aus üblichem Material wie Blech oder Kunststoff, und der z.B. als Stoßfänger ausgebildet ist, ist eine Lichtdurchlaßöffnung 2 ausgebildet, hinter der ein Scheinwerfer 3 über Laschen 4 und Schrauben 5 unverstellbar an der Karosserie angeschraubt ist.

Der Scheinwerfer 3 weist einen über eine Dichtung 6 angedichteten Heckteil 7 mit Flachreflektor 8 mit Glühlampenhalterung 9, Glühlampe 10 und Strahlenabdeckkappe 11 auf; 12 bezeichnet einen Zugangdeckel mit Durchlaßführung für ein Anschlußkabel 13.

Im Vorderteil des Scheinwerfers 3 ist über eine Dichtung 14 und einen O-Ring 15 eine Frontscheibe 16 mit Kreisprofil drehbar eingepreßt, sodaß sie von außerhalb der Karosserie mittels eines in eine Betätigungsbohrung 17 des Scheinwerfers 3 einsteckbare Schraubendrehers 18 über eine nicht dargestellte Randverzahnung auf der Frontscheibe 16 gegenüber dem Scheinwerfer 3 verdrehbar ist, wobei der Anpreßdruck der Frontscheibe 16 am O-Ring 15 einen Verdrehwiderstand erzeugt, sodaß nur über einen Schraubendreher Verstellbarkeit gegeben ist. Man erkennt, daß die Dicke der Frontscheibe 16 über deren Querschnitt nicht konstant ist, sondern in Fig. 1 von oben nach unten keilförmig zunimmt. Ein entlang der Linie 19 von der Glühlampe 10 in die Frontscheibe eintretender Lichtstrahl tritt somit als Strahl 20 aus und der Winkel zwischen Eintritt und Austritt ist umso größer, je größer die Dicke der Frontscheibe 16 ist.

Die Frontscheibe 16 ist gegenüber dem Scheinwerfer 3 beliebig verdrehbar und damit eine hohe Verstellbarkeit gegeben.

In Fig. 2 ist das bevorzugte Horizontalschnittprofil des Flachreflektors 8 gezeigt, nämlich als zur optischen Achse 21 asymmetrische Freifläche mit Kreuzstrahlercharakteristik, wie aus den von dem Glühfadenenden weg eingezeichneten Strahlengängen ersichtlich, damit der Durchstrahldurchmesser 22 der Frontscheibe 16 (die Fig. 1 und 2 sind nicht im selben Maßstab) klein gehalten werden kann.

Üblicherweise wird die Frontscheibe 16 aus Glas oder Kunststoff gefertigt, kann aber auch ein Verbundkörper sein (Zentralteil Glas, Zahnkranz Metall oder Kunststoff). Die Variation der Dicke der Frontscheibe 16 über ihren Querschnitt erfolgt in Abhängigkeit vom verwendeten Reflektor und vom Zweck der Fahrzeugleuchte. Mit anderen Worten muß die Dickenänderung auch nicht stetig sein, z.B. keine geraden Begrenzungslinien im Querschnitt ergeben.

Ebenso ist bezüglich des Abdichtens zwischen Frontscheibe 16 und Scheinwerfer 3 die Erfindung nicht an die dargestellte Ausführungsform gebunden.

## Patentansprüche

1. Fahrzeugscheinwerfer (3) mit verdrehbarer Leuchtenfrontscheibe (16), **dadurch gekennzeichnet, daß** die Leuchtenfrontscheibe (16) zur Lichtmusterjustierung eine sich über den Lichtabgabequerschnitt in einer Richtung linear ändernde Dicke aufweist.

2. Fahrzeugscheinwerfer nach Anspruch 1, **dadurch gekennzeichnet, daß** zur Verdrehung der Leuchtenfrontscheibe eine Randverzahnung an der Leuchtenfrontscheibe vorgesehen ist.

3. Fahrzeugscheinwerfer nach Anspruch 2, **dadurch gekennzeichnet, daß** die Verzahnung zur Betätigung durch einen Schraubendreher angeordnet ist.

4. Fahrzeugleuchte nach einem der Ansprüche 1 bis 3, **dadurch gekennzeichnet, daß** eine Halterung zum direkten Befestigen des Reflektors an der Karosserie vorgesehen ist.

5. Fahrzeugleuchte nach einem der Ansprüche 1 bis 4, **dadurch gekennzeichnet, daß** die Fahrzeugleuchte einschalig ist.

## Claims

1. Vehicle headlamp (3) having a rotatable front light disk (16), **characterised in that** the thickness of the front light disk (16) changes linearly in one direction over the light-emitting cross-section for the purpose of adjusting the light pattern.

2. Vehicle headlamp in accordance with claim 1, **characterised in that** a toothing arrangement is provided on the edge of the front light disk for the purpose of rotating said front light disk.

3. Vehicle headlamp in accordance with claim 2, **characterised in that** the toothing arrangement is disposed in such a manner that it can be actuated by means of a screwdriver.

4. Vehicle light in accordance with any one of claims 1 to 3, **characterised in that** a holding device is provided to attach the reflector directly to the bodywork.

5. Vehicle light in accordance with one of claims 1 to 4, **characterised in that** the vehicle light consists of a single bowl.

## Revendications

1. Phare de véhicule (3) équipé d'une optique rotative (16), **caractérisé en ce que** l'optique (16) présente une épaisseur se modifiant linéairement dans une direction sur la section transversale de l'émission de lumière pour ajuster le modèle de lumière.

2. Phare de véhicule selon la revendication 1, **caractérisé en ce que** pour faire tourner l'optique, il est prévu une dentelure périphérique sur l'optique.

3. Phare de véhicule selon la revendication 2, **caractérisé en ce que** la dentelure est agencée pour être actionnée au moyen d'un tournevis.

4. Phare de véhicule selon les revendications 1 à 3, **caractérisé en ce qu'**un raccord est prévu pour fixer directement le réflecteur sur la carrosserie.

5. Phare de véhicule selon l'une des revendications 1 à 4, **caractérisé en ce que** le phare de véhicule est à coffrage unique.
